# EUROPEAN PATENT SPECIFICATION

(11) **EP 0 460 563 B1**
(45) Date of publication and mention of the grant of the patent: **12.01.1994**
(21) Application number: 91109010.8
(22) Date of filing: 03.06.1991
(51) Int. Cl.: A01D 69/06, F16H 1/32, A01D 34/68

(54) **Mowing machine**
Mähmaschine
Faucheuse

(30) Priority: 05.06.1990 JP 147581/90
(43) Date of publication of application: 11.12.1991
(73) Proprietor: MATSUURA SANGYO CO., LTD., Ono-shi, Hyogo (JP)
(72) Inventor: Matsuura, Masatoshi, Ono-shi, Hyogo (JP)
(74) Representative: Hering, Hartmut, Dipl.-Ing.

(56) References cited:
- EP-A- 0 211 687
- BE-A- 720 665
- FR-A- 457 026
- GB-A- 1 165 358
- GB-A- 1 340 018
- JP-U- 1 084 533

## Description

The present invention relates to a moving machine using a power-transmission mechanism, in which two rotary blades are slid on each other to shear objects like scissors.

From FR-A-457 026 there is known a power transmission mechanism comprising a large ring gear with inner teeth, an annular gear having inner and outer teeth and a small gear concentric with the large gear. The large ring gear meshes with the outer teeth of the annular gear and the small gear meshes with the inner teeth of the annular gear. The difference between the numbers of each set of meshing teeth is one. The meshing contact between the large ring gear and the annular gear is diametrically opposite to that between the annular gear and the small gear. In use, the annular gear is eccentrically revolved as an input gear. The output may be either from the large ring gear or from the small gear. Hence, the ring gear functions as a first driven gear and the small gear functions as a second driven gear. This transmission has only a single rotating output. Thus, both the ring and small gears do not function at the same time.

A mowing machine of the kind referred to above may comprise rotating blade wheels mounted at the distal end of a lever, and a power source such as an engine mounted at the proximale end of the lever, in which the revolution of the engine is transmitted to the blade wheels to cut down grass in the woods or on the field.

Particularly, the mowing machine comprises two blade wheels that rotate in opposite directions while sliding on each other. Blades may be formed on the outer circumferences of the blade wheels to mow grass in such a way that a pair of scissors shear the grass. Typically, operating handles are mounted on the lever of the mowing machine, and a shoulder strap is provided if necessary so that the entire lever can be carried upon the shoulder for easy operation.

Conventionally, in order to transmit rotary motions in opposite directions on the same axis, it has been common that different combinations of gear means are connected to a single drive shaft in order to generate rotary motions of different rotary directions.

In the field of mowing machines conventionally the revolution of an engine is transmitted to a single blade wheel for mowing. More specifically, the blade wheel is rotated at a very high speed and blades established on the outer circumference of the wheel cut off grass or shrubs so as to mow them down, and the objects cut off are thrown outwardly by the centrifugal force of the blade wheel. This design can be very dangerous in that if the blade wheel ever touches the operator's leg or somebody else, a serious injury may be caused. It is also very dangerous if the blade wheel flips gravel or if it gets damaged or is out of its rotational balance, causing the entire machine to be uncontrollable.

In JP-U- 1-84533 there is disclosed a mowing machine that cuts off grass, like scissors, with blades formed on the outer circumferences of two blade wheels that rotate while sliding on each other. However, providing a power-transmission mechanism that reduces the high-speed engine revolution and transmits rotations in two different directions with spur gears requires a complicated structure comprising many gears or different set of gears. Such a mowing machine is getting too heavy, if carried by a person.

The conventional gear-transmission mechanism that transmits rotary motions in opposite directions on the same axis requires combinations of many gears, resulting in a large and inefficient device. Therefore, it is not practical to use the same for a power-transmission mechanism of a handheld power machine, such as mowing machine. Also the conventional mowing machine is difficult to put into practice, and as the engine generally runs at a high speed, a separate reduction mechanism is necessary, too.

In order to overcome the above mentioned problems and difficulties the main object of the invention is to provide a mowing machine using a power-transmission mechanism, which is of a simple structure, which can be made compact and light in weight with a minimum combination of gears for the speed reduction and which drives the final gears in opposite directions around the same axis.

According to a further object there is provided a compact and light mowing machine that shears with two blade wheels by employing the power-transmission mechanism which directly uses a high-speed power source, such as an engine.

According to the invention there is provided mowing machine using a power-transmission mechanism comprising a minimum combination of gears that reduce a high-speed revolution directly taken out of power source such as an engine.

The power-transmission mechanism thereof comprises a large ring gear (circular gear) having teeth on the inner circumference, an annular gear having teeth on both the inner and outer circumferences, and a small gear having the same axis as the large ring gear.

The mowing machine according to the invention comprises a large ring gear having teeth on an inner circumference, an annular gear having teeth on both the inner and outer circumferences, and a small gear having the same axis as the large ring gear, wherein said ring gear and said annular gear are in meshing engagement with each other and having a very small difference in the numbers of teeth between said ring gear and the teeth on the outer circumference of said annular gear, said annular gear and said small gear are in meshing engagement with each other opposite to the above meshing position of said ring gear and said annular gear and having a very small difference in the numbers of teeth between the inner circumference of said annular gear and said small gear, a part of a drive shaft is an eccentric shaft on which a bearing is mounted to transmit the revoulution of said drive shaft to said annular gear in the form of an eccentric revolution, bearings are mounted on said drive shaft to support said ring gear and said small gear, one of which is fixed to an upper blade wheel and the other is fixed to a lower blade wheel and said upper and lower blade wheels rotate in opposite directions while sliding on each other. Thus the upper blade wheel and the lower blade wheel that are disposed about one and the same axis rotate in opposite directions at a revolution reduction rate of a large reduction ratio.

Thus according to the mowing machine of the present invention the two blade wheels are rotated in opposite directions, thereby providing a small, light and easy-to-use mowing machine comprising two blade wheels for mowing.

The difference between the number of teeth of the ring gear and the number of teeth on the outer circumference of the annular gear is set very small, for example just one, for the meshing engagement of the gears. Likewise, the difference between the number of teeth of the small gear and the number of teeth on the inner circumference of the annular gear is also set very small, and the annular gear and the small gear are in meshing engagement with each other opposite to the meshing position of the above ring gear and the annular gear. The annular gear functions as the input gear and revolves eccentrically rather than concentrically. The ring gear that rotates while meshing with the annular gear functions as the first driven gear, and the small gear functions as the second driven gear.

When the annular gear revolves, the ring gear and small gear meshing with the annular gear rotate in opposite directions.

When the difference between the number of outer teeth of the annular gear and the number of teeth of the ring gear is one, the number of rotations of the ring gear equals one divided by the number of revolutions of the annular gear. Likewise, when the difference between the number of inner teeth of the annular gear and the number of teeth of the small gear is one, the number of rotations of the small gear equals one divided by the number of its teeth. The eccentric revolution of the annular gear is generated, for example, by designing a part of the drive shaft from the engine to be an eccentric shaft and using a bearing.

Further preferred embodiments are subject of the subclaims 2 and 3.

The foregoing and other objects, features and advantages of the invention will be apparent from the following more particular description of preferred embodiments of invention as illustrated in the accompanying drawings, in which
- Fig. 1: is a perspective viw of the entire mowing machine;
- Fig. 2: is a perspective view showing only the mowing part of the mowing machine;
- Fig. 3: is a vertical section of the mowing part of the mowing machine;
- Fig. 4: is a plan view showing a part of the upper and lower blade wheels provided with blades;
- Fig. 5: is a plan view showing a combination of spur gears constituting a power-transmission mechanism;
- Fig. 6: is an enlarged schematic view showing a meshing condition of the gears of Figur 5; and
- Fig. 7: is a plan view showing a combination of gears of a circular tooth profile constituting a power-transmission mechanism.

A preferred embodiment of the present invention will now be described with reference to the accompanying drawings.

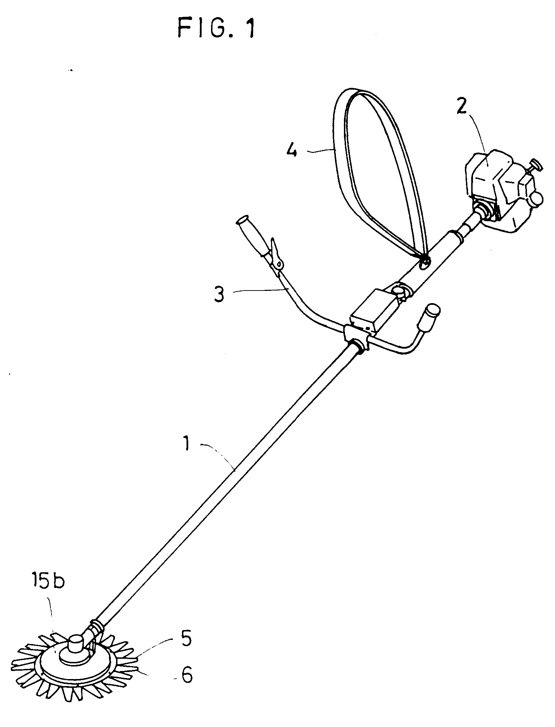

Figur 1 is a perspective view of an example of a mowing machine.

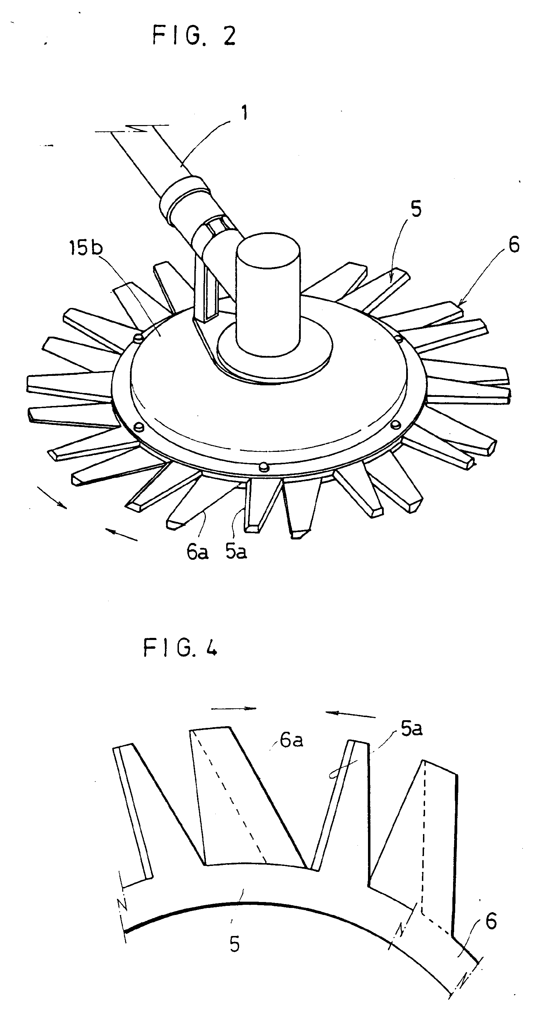

This mowing machine comprises a small engine 2 fixed at one end of a supporting lever 1 and a pair of rotating blade wheels 5, 6 provided at the distal end of the lever 1. The pair of blade wheels 5, 6 consists of an upper blade wheel 5 and a lower blade wheel 6 that rotate in opposite directions as shown in Figur 2, in which sharp cutting edges 5a and 6a are formed at the forward end of the blades 5, 6 that protrude radially on each blade wheel 5, 6.

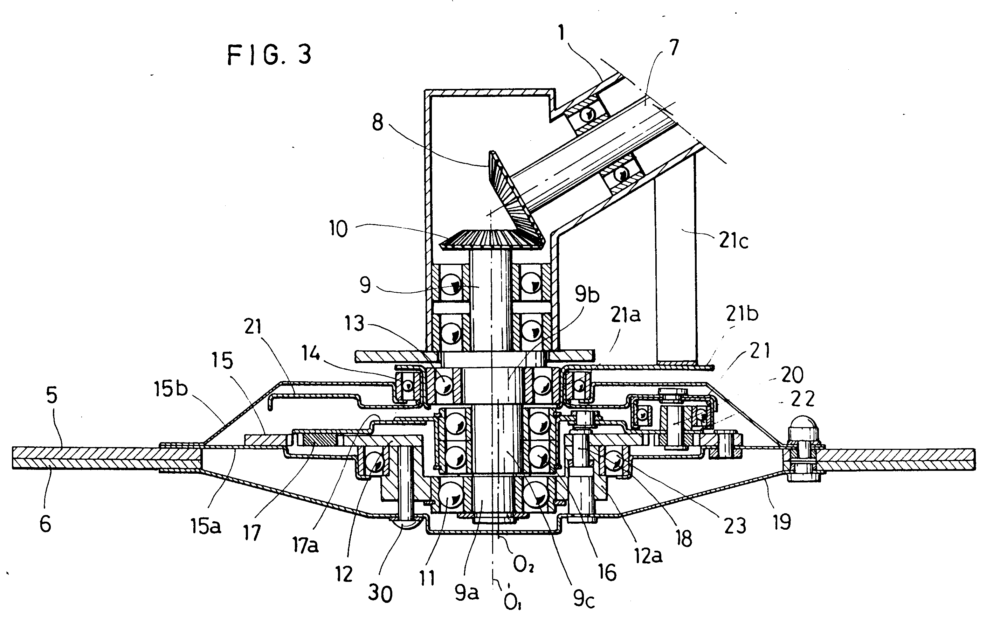

When mowing with a mowing machine, the lever 1 is held in such a way that its distal end inclines downwardly. Therefore, the direction of the lever 1 and the direction of a drive shaft 9 of the blade wheel cross at an acute angle. The revolution of the engine 2 is transmitted by meshing a bevel gear 8 established at the head of a transmission shaft 7, passing through the lever 1, with another bevel gear 10, which is provided on the drive shaft 9 for the blade wheel 5, 6 as shown in Figur 3. A flexible shaft can also be used to transmit the revolution of the engine 2 to the drive shaft 9.

As shown in Figur 3, the gear mechanism is supported at three different positions near the bottom end of the drive shaft 9 via bearings. More specially, at the very bottom of the drive shaft 9 is a small gear 12 mounted via a bearing 11, at the upper position is a ring gear 15 mounted via bearings 13 and 14, and between the bearing 11 and bearings 13, 14 is an annular gear 17 mounted via a bearing 16. The axis of a shaft part 9a of the drive shaft 9, on which the bearing 11 is mounted, and the axis of a shaft portion 9b, on which the bearing 13 is mounted, are both at the axis O₁, which is the axis of the entire shaft 9. On the contrary, the axis O₂ of a shaft portion 9c, on which the bearing 16 is mounted, is eccentric. Therefore as the drive shaft 9 performs one rotation, the annular gear 17 performs one eccentric revolution.

The small gear 12, which is made of a thin plate, is unitedly fastened to a supporting tube 12 via a screw 18. This unit is supported by the shaft portion 9c via the bearing 11. A bottom plate 19 is fastened to the supporting tube 12a by means of a screw 30, and the lower blade wheel 6, which is formed annular on the outer circumference of the bottom plate 19, is fastened thereto via a screw.

The annular gear 17 is made of a thin plate, and a holder 17a is fastened thereto. The center of the holder 17a is of tube-shape, within which the bearing 16 is inserted. The annular gear 17 is provided with carrier pins 20, which protrude upwardly and engage a rotation-restricting disc 21 so that the annular gear 17 does not rotate concentrically but revolve eccentrically. More specifically, the rotation-restricting disc 21 is provided with bearings 22 having a larger diameter than the carrier pins 20 to allow for oscillation caused by the eccentricity of the shaft portion 9c, in such a way that the bearings 22 match the carrier pins 20 of the annular gear 17, with which bearings carrier pins 20 are engaged. A tube 21a that is formed at the center of the rotation-restricting disc 21 engages, from below, with the outer circumference of the bearing 13 that engages with the shaft portion 9b of the drive shaft 9, and protrudes outwardly from the top, and from the outer panel 21b, that protrudes outwardly, an arm 21c protrudes upwardly and the arm 21c is connected to a part of the lever 1, thereby fastening the rotation-restricting disc 21 so that it does not rotate concentrically. The bearing 14 engages with the outer circumference of the tube part 21a of the rotation-restricting disc 21. The tube part 21a of the rotation-restricting disc 21 is held between the outer circumference of the bearing 13 and the inner circumference of the bearing 14.

A supporting disc 15a is fastened to the bottom surface of the ring gear 15 that engages with the annular gear 17, and on the outer circumference of the disc 15a the upper blade wheel 5 is linked and fastened by screws. This upper blade wheel 5 and the former mentioned lower blade wheel 6 are adjusted in such a way that they slide on each other. The inner circumference of the supporting disc 15a of the ring gear 15 is supported by the supporting tube 12a of the small gear 12 so as to freely rotate via a bearing 23. In addition to the supporting disc 15a, a cover 15b is fastened to the annular gear 15 so as to cover the rotation-restricting disc 21 from above, and while the center of the cover 15b engages with the outer circumference of the bearing 14, the outer circumference of the cover 15b is fastened to the upper blade wheel 5. In other words, the upper blade wheel 5 is held by the supporting disc 15a and the cover 15b, and thanks to the bearing 14 and 23, it can rotate freely. Therefore, as the drive shaft 9 rotates, the speed of the upper blade wheel 5 and the lower blade wheel 6 are individually reduced at a large reduction ratio and rotate in opposite directions.

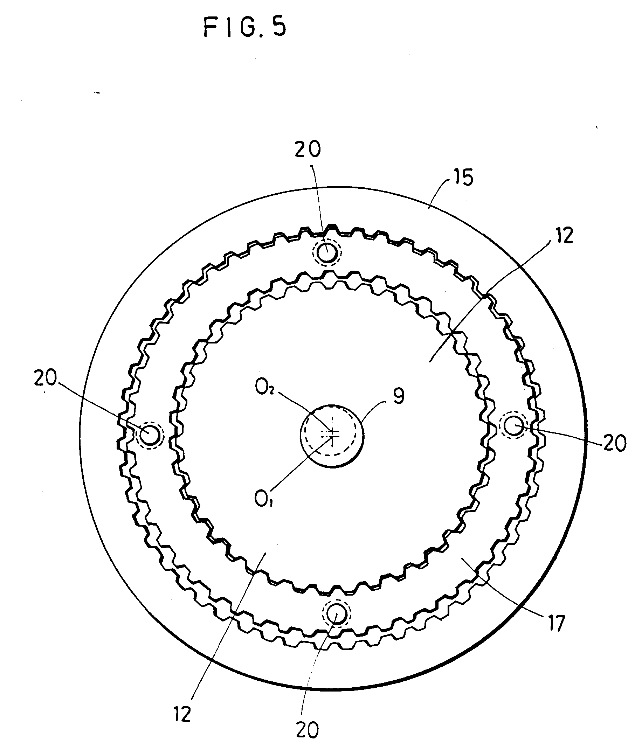

The shapes of blades of the upper blade wheel 5 and the lower blade wheel 6 are not limited as long as they are shaped so as to be able to shear like scissors. Examples of blades are shown in Figur 4. In this embodiment, the upper and lower blade wheels 5, 6 are both annular with blades protruding radially. The cutting edges 5a and 6a that are at the forward end in the rotating directions are both slanted backwards from the rotating direction, so that an uncuttable object that accidentally comes between them is automatically pushed out. Furthermore, the clearance angles of the blade 5a of the upper blade wheel 5 and the blade 6a of the lower blade wheel 6 are different in amount. That is, the blade lengths of the blade 5a and blade 6a are different so that they cut an object as they performing a shearing motion in relation to the object to be cut.

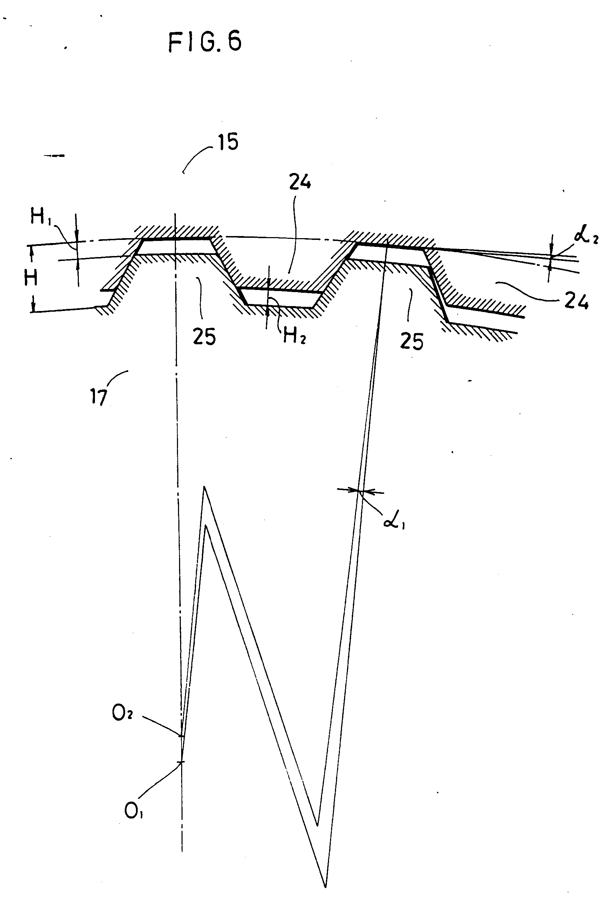

Figur 5 is a plan view showing an embodiment of the power-transmission mechanism using a combination of spur gears, and Figur 6 is an explanatory view showing a partially enlarged part of the same.

The ring gear 15 is engaged with the outer teeth of the annular gear 17, and the small gear 12 is engaged with the inner teeth of the annualar gear 17. All teeth have the same module, and the ring gear 15 has one tooth more than the annular gear 17, and the small gear 12 has one tooth less than the annular gear 17.

The ring gear 15 and the small gear 12 are both centered about O₁, and the annular gear 17 is centered about O₂, which is eccentric to O₁. As the rotation of the annular gear 17 is restricted by the carrier pins 20, the annular gear 17 revolves eccentrically as the drive shaft 9 rotates around O₁ with the distance between O₁ and O₂ as the radius. The distance between the centers is determined by the difference between the numbers of teeth of the gears and the module. The eccentricity in the combination of the ring gear 15 and the annular gear 17 must be the same as the eccentricity in the combination of the annular gear 17 and the small gear 12. The combination of the ring gear 15 and the outer teeth of the annular gear 17 and the combination of the inner teeth of the annular gear 17 and the small gear 12 respectively function as a relative reduction mechanism of the internal planetary gear type. Generally, in an internal-planetary-gear type mechanism, when a difference between the numbers of teeth is very small, for example just one, it is said that spur gears are not usable due to conflicts of teeth. However, there is provided a special tooth profile for each gear so that spur gears can be used. This will now be explained with reference to Figur 6, using the relationship between the ring gear 15 and the outer teeth of the annular gear 17.

Spur-gear tooth profiles 24 are formed on the ring gear 15, comprising inclined lines with a standard pitch circle P₀ as the tooth bottom. The other teeth 25 that mesh with the above teeth are formed on the outer circumference of the annular gear 17. The tips of the teeth 24 and 25 are cut off by H₁ and H₂ respectively. This makes a plurality of teeth on both gears within a certain range from the meshing center to engage with each other with surface-to-surfache contact areas between them. As shown in Figur 6, at one pitch from the center line running through centers O₁ and O₂ of the two gears, the ratio of α1, the difference between the center angles, to α2, the difference between the directions of the teeth, is 2 to 1. By designing the engaging surfaces of the teeth 24 and 25 to be slanting surfaches with the ratio of the height to the circumferential length of 2 to 1, the contact area starts engagement while maintaining complete surface-to-surface contact, and the variation of engagement depth generates surface sliding.

It is clear that the above teeth contact each other surface-to-surface from the following explanation.

In Figur 6 it is supposed that the number of teeth of the ring gear 15 is Z₁, and the number of teeth on the outer circumference of the annular gear 17 is Z₂, center angles of a ring-gear tooth and a corresponding annular-gear tooth at one-pitch distance from the center line are Z₁/360° and Z₂/360° respectively. Whereas angles between a tangent of the pitch circle that is on the center line that passes through centers O₁ and O₂ and a line that connects the tops of the two adjacent teeth are Z₁/180° and Z₂/180° respectively. Therefore, the angle α1 is twice as large as angle α2, and if the contact areas of the teeth are designed to be slanting surfaces with the ratio of the height to the circumferential distance of 2 to 1, the contact area between teeth 24 and 25 is always realized as a surface-to-surface contact.

A conflict between teeth 25 and 24 can be avoided by cutting off their tips for H₁ and H₂ respectively. In the case of standard spur gear, in which the pitch circle passes through the center of the height of a tooth, it is difficult to select such a cut-off amount, but in the above embodiment, the cut-off amount of a tooth is relatively small due to the relationship between the standard pitch circle P₀ and the tooth profile. Tests revealed that good result were obtained by cutting the tip of the tooth in an amount of 25% of the height of the tooth.

The mechanism of teeth and meshing between the inner teeth of the annular gear 17 and the small gear 12 is the same as that of the above mentioned ring gear 15 and the outer teeth of the annular gear 17.

The mechanism of the internal planetary gear type itself, is a combination of two gears, i.e., a drive gear and a driven gear. Circular tooth profiles are used as tooth profiles for providing smooth engagement.

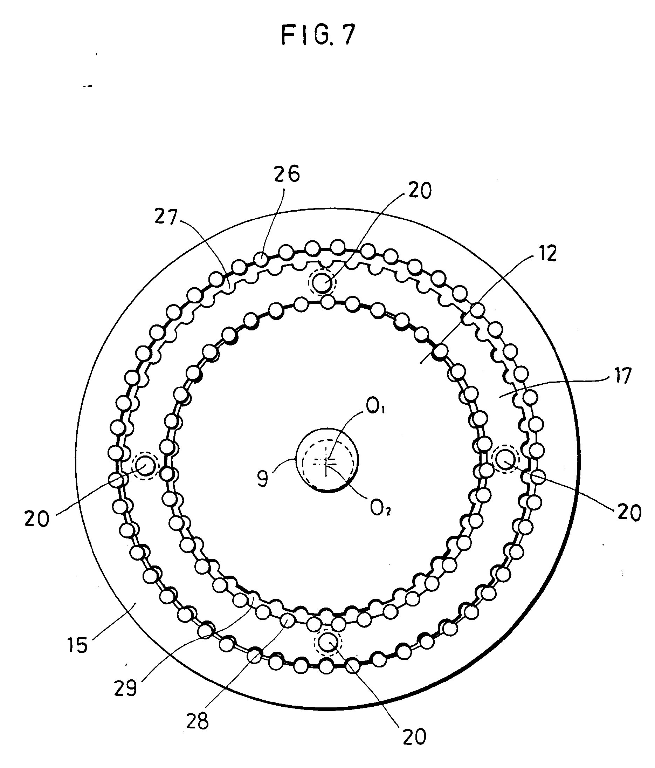

Figur 7 shows an embodiment in which circular tooth profiles, made by combinations of ciruclar teeth 26, 28 and concaves 27, 29, are used respectively for the combination of the ring gear 17 and the outer circumference of the annular gear 15, and the combination of the inner teeth of the annular gear 17 and the small gear 12.

The gears shown in Figur 7 use teeth of a circular tooth profile as the power-transmitting teeth, but the spur-gear model shown in Figur 6 is easy to manufacture, and the contact areas for power transmission are surface-to-surface without causing conflicts of teeth, thereby transmitting power efficiently. Therefore, it is possible to make a smaller and lighter power-tranmission mechanism.

The mowing machine of the present invention using the power-transmission mechanism comprising the annular gear 17 employs two blade wheels 5, 6 that rotate in opposite directions to mow grass by shearing. Therefore grass and shrubs can be surely and cleanly mowed. Moreover, one drive shaft 9 drives a combination of only three gears 12, 15, 17 which are reduced by large reduction ratios and rotate in opposite directions to one another. Therefore the revolution of a high-speed running engine 2 can be directly used without a speed reducing device, and as a result, it is possible to make a compact and light mowing machine.

The mowing machine of the present invention also allows the mowing position to be easily moved by making the lower blade wheel 6 contact the ground, and the rotation of the upper blade wheel 5 prevents cut grass or shrubs from accumulating on the blade wheel 5, 6 itself.

While the invention has been particularly shown and described with reference to several embodiments, it will be understood by those skilled in the art that various changes in form and detail may be made without departing from the scope of the invention.

### Reference signs

- 1: supporting levers
- 2: engine
- 5: upper blade wheel
- 5a: cutting edge
- 6: lower blade wheel
- 6a: cutting edge
- 7: power-transmission shaft
- 8: bevel gear
- 9: drive shaft
- 9a: shaft part
- 9b: shaft portion
- 9c: shaft portion
- 10: bevel gear
- 11, 13, 14, 16, 22, 23: bearings
- 12: small gear
- 15: ring gear
- 15b: cover
- 17: annular gear
- 18: screw
- 19: bottom plate
- 20: carrier pin
- 21: rotation-restricting plate
- 21a: supporting tube
- 21b: outer panel
- 21c: arm
- 24, 25: spur gear tooth profiles
- 26: circular teeth
- 27: concaves
- 28: circular teeth
- 29: concaves
- 30: screw

## Claims

1. A mowing machine using a power-transmission mechanism comprising a large ring gear (15) having teeth on an inner circumference, an annular gear (17) having teeth on both the inner and outer circumferences, and a small gear (12) having the same axis as the large ring gear (15) wherein said ring gear (15) and said annular gear (17) are in meshing engagement with each other and having a very small difference in the numbers of teeth between said ring gear (15) and the teeth on outer circumference of said annular gear (17), said annular gear (17) and said small gear (12) are in meshing engagement with each other opposite to the above meshing position of said ring gear (15) and said annular gear (17) and having a very small difference in the numbers of teeth between the inner circumference of said annular gear (17) and said small gear (12), a part of a drive shaft (9) is an eccentric shaft (9c) on which a bearing (16) is mounted to transmit the revolution of said drive shaft (9) to said annular gear (17) in the form of an eccentric revolution, bearings (11, 13, 14) are mounted on said drive shaft (9) to support said ring gear (15) and said small gear (12), one of which is fixed to an upper blade wheel (5) and the other is fixed to a lower blade wheel (6) and said upper and lower blade wheels (5, 6) rotate in opposite directions while sliding on each other.

2. A mowing machine according to claim 1, wherein said ring gear (15) is provided with teeth of an inclined-lined tooth profile (24) with a standard pitch circle Pₒ as the bottom, and said annular gear (17) is provided on its outer circumference with teeth of an inclined-lined spur-gear tooth profile (25) that mesh with the above ring gear teeth, said annular gear (17) is provided on its inner circumference with teeth of an inclined-lined tooth profile with the standard pitch circle Pₒ as the bottom, and said small gear (12) is provided with teeth of an inclined-lined spur-gear tooth profile that mesh with the above inner circumferential teeth of said annular gear (17), all teeth have the same module, and their tips (H1, H2) are cut off for a predetermined amount, said difference in numbers (Z₁, Z₂ ) of teeth between said ring gear (15) and the teeth on the outer circumference of said annular gear (17), and the difference in numbers of teeth between the teeth on the inner circumference of said annular gear (17) and said small gear (12) are the same; and said upper blade wheel (5) is fixed to either said ring gear (15) or said small gear (12) and said lower blade wheel (6) is fixed to the respective other one.

3. A mowing machine according to claim 1, wherein circular tooth profiles are formed respectively for teeth (26) of said large ring gear (15) and outer circumferential teeth (27) of said annular gear (17) as meshing combination and for inner circumferential teeth (28) of said annular gear (17) and teeth (29) of said small gear (12) as meshing combination and said upper blade wheel (5) is fixed to either said ring gear (15) or said small gear (12) and said lower blade wheel (6) is fixed to the respective other one.

## Patentansprüche

1. Mähmaschine mit einer Energieübertragungseinrichtung, welche ein großes Hohlrad (15) aufweist, welches Zähne auf einem Innenumfang hat, ferner einen Zahnring (17) aufweist, welcher Zähne sowohl auf dem Innenumfang als auch auf dem Außenumfang hat, und ein kleines Zahnrad (12) aufweist, welches die gleiche Achse wie das große Hohlrad (15) hat, bei der das Hohlrad (15) und der Zahnring (17) in Kämmeingriff miteinander sind und ein sehr kleiner Unterschied hinsichtlich der Zähnezahl zwischen dem Hohlrad (15) und der Zähnezahl auf dem Außenumfang des Zahnrings (17) vorhanden ist, der Zahnring (17) und das kleine Zahnrad (12) in Kämmeingriff miteinander gegenüberliegend zu der vorstehend genannten Kämmeingriffsposition des Hohlrads (15) und des Zahnrings (17) sind und ein sehr kleiner Unterschied hinsichtlich der Zähnezahl zwischen den Zähnen auf dem Innenumfang des Zahnrings (17) und dem kleinen Zahnrad (12) vorhanden ist, ferner ein Teil einer Antriebswelle (9) eine Exzenterwelle (9c) bildet, auf welcher ein Lager (16) angebracht ist, um die Umdrehungsbewegung der Antriebswelle (9) auf den Zahnring (17) in Form einer exzentrischen Umlaufbewegung zu übertragen, bei der ferner Lager (11, 13, 14) auf der Antriebswelle (9) vorgesehen sind, um das Hohlrad (15) und das kleine Zahnrad (12) zu lagern, von denen eines fest mit einem oberen Schneidrad (5) und das andere fest mit einem unteren Schneidrad (6) verbunden ist, und die oberen und unteren Schneidräder (5, 6) sich in Gegenrichtungen unter Ausführung einer Gleitbewegung aufeinander drehen.

2. Mähmaschine nach Anspruch 1, bei der das Hohlrad (15) mit Zähnen mit einem geneigten geradlinigen Zahnprofil (24) mit einem Grundwälzkreis Pₒ als Boden versehen ist, und der Zahnring (17) auf seinem Außenumfang mit Zähnen mit einem geneigten geradlinigen Stirnzahnprofil (25) versehen ist, welches mit den Zähnen des vorstehend genannten Hohlrads kämmt, der Zahnring (17) auf seinem Innenumfang mit Zähnen mit einem geneigten geradlinigen Zahnprofil mit einem Grundwälzkreis Pₒ versehen ist, und das kleine Zahnrad (12) mit Zähnen mit einem geneigten geradlinigen Stirnzahnprofil versehen ist, welches mit den vorstehend angegebenen Zähnen auf dem Innenumfang des Zahnrings (17) kämmt, alle Zähne den gleichen Zahnmodul haben und ihre Oberteile (H1, H2) um eine vorbestimmte Größe abgeschnitten sind, die Differenz der Zähnezahl (Z₁, Z₂ ) der Zähne zwischen dem Hohlrad (15) und den Zähnen auf dem Außenumfang des Zahnrings (17) und die Differenz der Zähnezahl zwischen den Zähnen auf dem Innenumfang des Zahnrings (17) und des kleinen Zahnrads (12) gleich sind, und bei dem das obere Schneidrad (5) entweder fest mit dem Hohlrad (15) oder dem kleinen Zahnrad (12) verbunden ist und das untere Schneidrad (6) fest mit dem jeweils anderen Rad verbunden ist.

3. Mähmaschine nach Anspruch 1, bei der die kreisförmigen Zahnprofile jeweils für die Zähne (26) des großen Hohlrads (15) und die Zähne (27) auf dem Außenumfang des Zahnrings (17) als Kämmeingriffskombination und für die Zähne (28) auf dem Innenumfang des Zahnrings (17) und die Zähne (29) des kleinen Zahnrads (12) als Kämmeingriffskombination ausgebildet sind, das obere Schneidrad (5) fest entweder mit dem Hohlrad (15) oder dem kleinen Zahnrad (12) verbunden ist, und das untere Schneidrad (6) mit dem entsprechend anderen Zahnrad verbunden ist.

## Revendications

1. Faucheuse utilisant un mécanisme de transmission d'énergie comprenant une grande couronne dentée (15) ayant des dents sur la circonférence intérieure, un anneau denté (17) ayant des dents aussi bien sur la circonférence intérieure que sur la circonférence extérieure et un petit pignon (12) ayant le même axe que la grande couronne dentée (15), ladite couronne dentée (15) et ledit anneau denté (17) engrenant l'une avec l'autre et ayant une très petite différence des nombres de dents entre ladite couronne dentée (15) et les dents de la circonférence extérieure dudit anneau denté (17), ledit anneau denté (17) et ledit petit pignon (12) étant en prise l'un avec l'autre sur le côté opposé à la position d'engrènement, spécifiée ci-dessus, de ladite couronne dentée (15) et dudit anneau denté (17) et ayant une très petite différence des nombres de dents entre la circonférence intérieure dudit anneau denté (17) et ledit petit pignon (12), une partie d'un arbre de commande (9) est un arbre excentré (9c) sur lequel un roulement (16) est monté pour transmettre la révolution dudit arbre de commande (9) audit anneau denté (17) sous la forme d'une révolution excentrée, des roulements (11, 13, 14) sont montés sur ledit arbre de commande (9) afin de supporter ladite couronne dentée (15) et ledit petit pignon (12), l'un de ces derniers étant fixé à une roue supérieure (5) à lames et l'autre étant fixé à une roue inférieure (6) à lames et lesdites roues supérieure et inférieure (5, 6) à lames tournant en sens opposés en glissant l'une sur l'autre.

2. Faucheuse selon la revendication 1, dans laquelle ladite couronne dentée (15) comporte des dents à profil de dent à flancs inclinés (24) et à cercle primitif normalisé Pₒ qui en forme le fond et ledit anneau denté (17) comporte à la circonférence extérieure des dents à profil de dent (25) à flancs inclinés d'engrenage droit qui engrènent avec les dents spécifiées ci-dessus de la couronne dentée, ledit anneau denté (17) comporte sur la circonférence intérieure des dents à profil de dent à flancs inclinés et à cercle primitif normalisé Pₒ qui en forme le fond et ledit petit pignon (12) comporte des dents à profil de dent à flancs inclinés d'un engrenage droit qui engrènent avec les dents circonférentielles intérieures, spécifiées ci-dessus, dudit anneau denté (17), toutes les dents ayant le même module et leurs sommets (H1, H2) sont entaillés sur une distance prédéterminée, ladite différence des nombres (Z₁, Z₂) des dents entre ladite couronne dentée (15) et les dents de la circonférence extérieure dudit anneau denté (17) et la différence des nombres des dents entre les dents de la circonférence intérieure dudit anneau denté (17) et dudit petit pignon (12) sont les mêmes et ladite roue supérieure (5) à lames est fixée soit à ladite couronne dentée (15), soit au petit pignon (12) et ladite roue inférieure à lames (6) est fixée à l'autre, respectif, de ceux-ci.

3. Faucheuse selon la revendication 1, dans laquelle des profils de dent circulaire sont formés respectivement pour les dents (26) de ladite grande couronne dentée (15) et les dents circonférentielles extérieures (27) dudit anneau denté (17) et engrènent les uns avec les autres, ainsi que pour les dents circonférentielles intérieures (28) dudit anneau denté (17) et les dents (29) dudit petit pignon (12) qui engrènent les unes avec les autres et ladite roue supérieure (5) à lames est fixée soit à ladite couronne dentée (15), soit au petit pignon (12) et la roue inférieure (6) à lames est fixée à l'autre, respectif, de ceux-ci.
